# EUROPEAN PATENT SPECIFICATION

(11) **EP 2 243 412 B1**
(45) Date of publication and mention of the grant of the patent: **29.04.2015**
(21) Application number: 09163738.9
(22) Date of filing: 25.06.2009
(51) Int. Cl.: A47L 9/00, G05D 1/02, A47L 9/28

(54) **Robot cleaner**
Roboterreiniger
Robot nettoyeur

(30) Priority: 22.04.2009 KR 20090034918
(43) Date of publication of application: 27.10.2010
(73) Proprietor: Yujin Robot Co., Ltd., Seoul 153-802 (KR)
(72) Inventor: Shin, Kyung-Chul, 158-050, Seoul (KR); Park, Seong-Ju, 403-749, Incheon-si (KR); Lee, No-Soo, 406-763, Incheon-si (KR)
(74) Representative: Chaillot, Geneviève

(56) References cited:
- WO-A1-2006/068403
- WO-A1-2008/105634
- JP-A- 2002 360 480

## Description

### BACKGROUND OF THE INVENTION

### 1. Field of the Invention

The present invention relates to robot cleaners and, more particularly, to a robot cleaner that has improved movement ability to provide various functions, such as doorsill-overpassing, carpet-traveling, and the like, through improvement in arrangement of a battery, a suction motor, a main brush, and a dust collection box.

### 2. Description of the Related Art

Generally, a robot cleaner refers to a device for cleaning a room according to detection results of internal sensors without a user's direct control. For cleaning operation, the robot cleaner determines a target cleaning area using an obstacle sensor such as an infrared sensor or the like, and a movement-distance sensor measuring a movement distance, location and the like, which are typically disposed inside a main body of the cleaner, while moving along a periphery of the cleaning area surrounded by a wall or an obstacle. Then, the robot cleaner sets a cleaning course for cleaning the determined cleaning area and moves along the cleaning course for the cleaning operation while calculating a movement distance and a current location based on signals from a sensor detecting a revolution number and a rotated angle of a wheel of the cleaner.

Typically, the robot cleaner includes a dust suction unit including a dust inlet and a rotatable brush; a sensor unit including the obstacle sensor, the movement-distance sensor for measuring a movement distance, location and the like; a drive unit including driving rollers provided at lateral sides of the cleaner and direction-changing rollers provided at front and rear sides; and a controller controlling the dust suction unit, the sensor unit, and the drive unit.

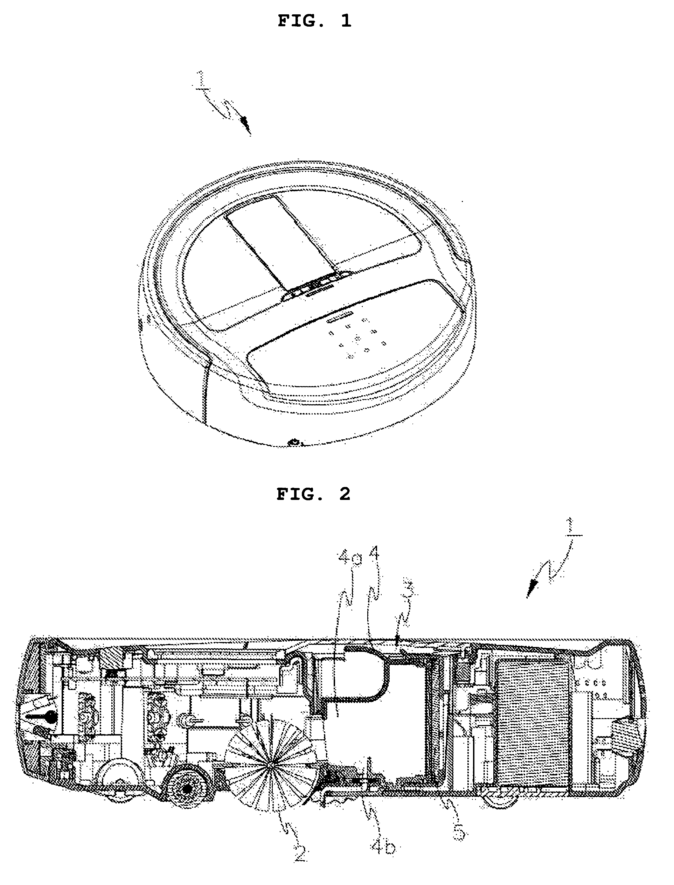

Fig. 1 is a view of a conventional robot cleaner, and Fig. 2 is a side section view of the robot cleaner shown in Fig. 1.

Referring to Figs. 1 and 2, the robot cleaner has a disc shape to quickly sheer away from a wall or obstacle and smoothly change a direction during cleaning operation.

The driving rollers are disposed at lower opposite sides of the robot cleaner 1 and the direction-changing rollers are disposed at lower front and rear sides thereof perpendicular to the driving rollers, so that the cleaner 1 can move forward and backward as the driving rollers rotate in the forward and backward directions, and can also move leftward and rightward as the direction-changing rollers rotate in the forward and backward directions. Thus, during the cleaning operation, the robot cleaner 1 can collect dust and foreign matter on a floor of a room into a dust collection box by a rotational force and negative pressure of the rotatable brush located in front of the dust collection box while changing a traveling direction through cooperation among the driving rollers and the direction-changing rollers.

In the robot cleaner 1, suctioning of dust or foreign matter can be achieved by the brush assembly 2 that rotates while touching a floor to be cleaned to agitate the dust or foreign matter, and the dust suction unit 3 that sucks in the floating dust or foreign matter.

Here, the dust suction unit 3 includes a dust collection box 4 receiving and temporarily storing dust or foreign matter, a filter unit 5 communicatively coupled to a rear side of the dust collection box 4 to separate fine dust or foreign matter, and a suction duct assembly communicating with the filter unit 5 and generating air flow to introduce dust or foreign matter into the dust collection box 4 and the filter unit 5.

WO 2006/068403 discloses a robot cleaner according to the preamble of claim 1.

### SUMMARY OF THE INVENTION

An aspect of the present invention is to provide a robot cleaner that has improved movement ability to provide various functions, such as doorsill-overpass, carpet-traveling, and the like, through improvement in arrangement of a battery, a suction motor, a main brush, and a dust collection box, and to allow better use of the robot cleaner.

In accordance with one embodiment of the invention, there is provided a robot cleaner including a drive wheel driven to move on a cleaning course set according to a detection result of an internal sensor, a brush assembly disposed at a bottom of the robot cleaner, and a suction unit disposed around a center of the robot cleaner to collect dust or foreign matter from a floor of a room when the brush assembly rotates while touching the floor, **characterized in that** the suction unit includes a dust collection box disposed behind the drive wheel and spaced a predetermined distance therefrom; a filter unit communicatively coupled to a rear side of the dust collection box; a suction duct assembly mounted on a center of the suction unit to face the drive wheel and having one end communicatively coupled to the filter unit to suction air for drawing the dust and foreign matter from the floor into the dust collection box; a dual bumper having a composite structure capable of sensing collision and compression of the bumper; and a battery mounted between the suction duct assembly and the dual bumper. Here, the battery is spaced a predetermined distance from a front side of the drive wheel.

The suction duct assembly includes a suction motor disposed between the battery and a main brush motor; and a suction channel having one end coupled to the suction motor with one end of the suction motor inserted into the one end of the suction channel, and the other end bent to be disposed along the dual bumper. Here, the suction channel is disposed outside one end of the dust collection box and the brush assembly.

The robot cleaner may further include a floor sensor and an obstacle sensor coupled to the dual bumper and spaced a predetermined distance from each other, wherein the dual bumper is divided into upper and lower parts.

The dual bumper may be formed with spaces each having a predetermined shape and placed at regular intervals on an inner side of the dual bumper.

A compression sensing part detecting an external force may be disposed in the space of the dual bumper.

The compression sensing part may include sensor films coupled to a horizontal bottom surface and a vertical wall of the space.

The sensor film may include a flexible print circuit board (FPC) and two lines of print pattern formed on the FPC.

The compression sensing part may be a bidirectional contact-type rubber. The bidirectional contact-type rubber may include bottom portions and lateral portions alternating with each other at regular intervals, each of the bottom portions and the lateral portions being formed with a carbon pattern.

### BRIEF DESCRIPTION OF THE DRAWINGS

The above and other aspects, features and advantages of the invention will become apparent from the following description of embodiments given in conjunction with the accompanying drawings, in which:
Fig. 1 is a view of a conventional robot cleaner;
Fig. 2 is a side section view of Fig. 1;
Fig. 3 is an exploded perspective view of a robot cleaner according to one embodiment of the present invention;
Fig. 4 is a view illustrating one example of a compression sensing part in a dual bumper of Fig. 3; and
Fig. 5 is a view illustrating another example of the compression sensing part in the dual bumper of Fig. 3.

### DETAILED DESCRIPTION OF THE EMBODIMENTS

Hereinafter, embodiments of the present invention will be described in detail with reference to the accompanying drawings.

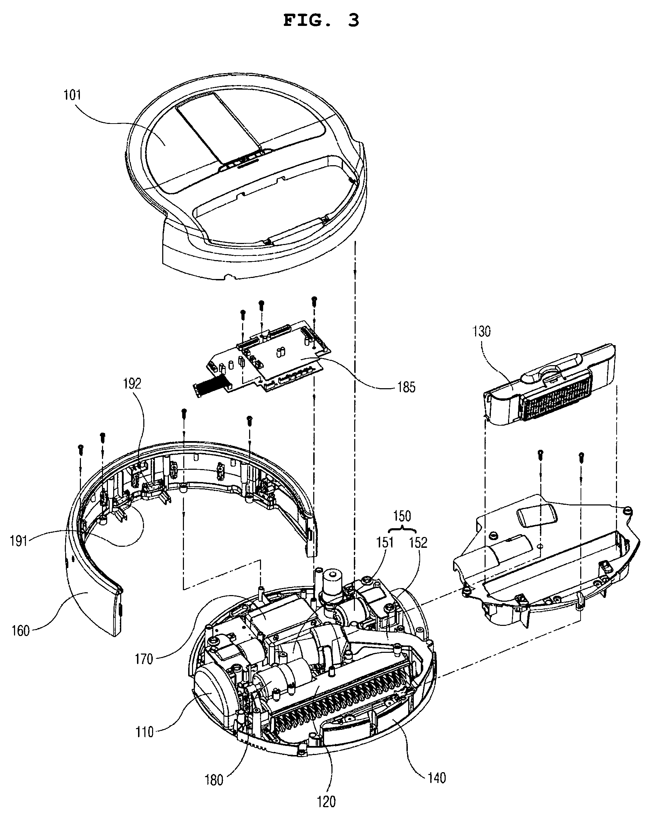

Referring to Fig. 3, a robot cleaner according to one embodiment of the invention includes a drive wheel 110 driven to move on a cleaning course set according to a detection result of an internal sensor, a brush assembly 120 disposed at a bottom of the robot cleaner, and a suction unit disposed around a center of the robot cleaner to collect dust or foreign matter from a floor of a room when the brush assembly 120 rotates while touching the floor.

The suction unit includes a dust collection box 130 disposed behind the drive wheel 110 and spaced a predetermined distance from the drive wheel 110; a filter unit 140 communicatively coupled to a rear side of the dust collection box 130; a suction duct assembly 150 mounted on a center of the suction unit to face the drive wheel 110 and having one end communicatively coupled to the filter unit 140 to suction air for drawing dust and foreign matter from the floor into the dust collection box 130; and a battery 170 mounted between the suction duct assembly 150 and a dual bumper 160 to be spaced a predetermined space from a front side of the drive wheel 110. The dual bumper has a composite structure capable of sensing collision and compression 160

The suction duct assembly 150 includes a suction motor 151 disposed between the battery 170 and the main brush motor 180; and a suction channel 152 having one end coupled to the suction motor 151 with one end of the suction motor 151 inserted into the one end of the suction channel 152, and the other end bent to be disposed along the dual bumper 160. Here, the suction channel 152 is disposed outside one end of the dust collection box 130 and the brush assembly 120.

The dual bumper 160 is divided into upper and lower parts. The robot cleaner further includes a floor sensor 191 and an obstacle sensor 192 that are coupled to the dual bumper 160 and spaced a predetermined distance from each other. The sensors may be infrared sensors.

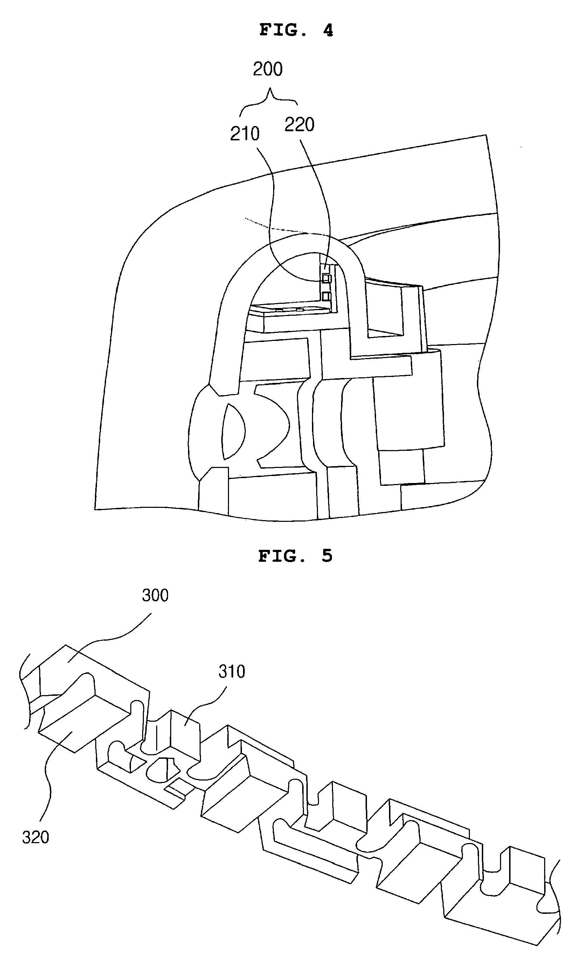

Referring to Figs. 4 and 5, the dual bumper 160 is formed at an inner side thereof with spaces each having a predetermined shape and placed at regular intervals. Each space of the dual bumper 160 is provided with a compression sensing part detecting an external force.

Further, the robot cleaner according to this embodiment includes a controller 185 that stops the drive wheel when the compression sensing part outputs a high-level signal.

The compression sensing part outputs the high-level signal when compressed by an external force, but otherwise outputs a low-level signal. Thus, the controller 185 determines whether the compression sensing part outputs the high-level signal or the low-level signal, and outputs a driving stop signal to a drive motor driving the drive wheel 110 when receiving the high-level signal, thereby controlling the robot cleaner not to travel in a movement direction any more. Thus, it is possible to solve problems arising when the robot cleaner is forced to be driven under difficult conditions, such as doorsills, carpets, etc.

According to one embodiment, the compression sensing part is realized by sensor films 200 as shown in Fig. 4. The sensor films 200 are coupled to a horizontal bottom surface and any vertical wall of the space.

The sensor film 200 includes a flexible printed circuit board (FPC) 220, and a print pattern 210 formed in two lines on the FPC 220.

According to another embodiment, the compression sensing part is realized by a bidirectional contact-type rubber 300 as shown in Fig. 5. The bidirectional contact-type rubber 300 includes bottom portions 320 and lateral portions 310 alternating with each other at regular intervals, in which each of the bottom portions 320 and the lateral portions 310 is formed with a carbon pattern.

In the robot cleaner with configuration as described above, the battery is disposed in front of the drive wheel 110 and the suction motor 151 is disposed at the center of the robot cleaner, thereby minimizing noise during operation of the robot cleaner. Further, the brush assembly 120 and the dust collection box 130 are disposed behind the drive wheel 110 so that the robot cleaner according to this embodiment has improved movement ability. In particular, the robot cleaner efficiently travels even through areas such as doorsills, carpets, etc. which are difficult to pass over or travel on. Thus, the robot cleaner according to this embodiment has improved performance.

Further, the floor sensor 191 is coupled not to the bottom of the main body but to the dual bumper 160, so that the robot cleaner can be conveniently assembled, thereby improving productivity for mass production. Further, since the dual bumper 160 is manufactured with the upper and lower two parts to be easily assembled or disassembled, the dual bumper 160 can be easily separated from the robot cleaner when the robot cleaner is repaired, and easily coupled to the robot cleaner after the repair.

Referring to Fig. 4, the dual bumper 160 is formed with a space having a predetermined shape, and the sensor films 200 are provided as the compression sensing part on the horizontal surface of the space and the vertical surface extending from one end of the horizontal surface. If the space is compressed by a predetermined force, the compression of the space is sensed and it is determined that the robot cleaner is caught in a predetermined gap such as a sofa or the like, thereby allowing the robot cleaner to perform a corresponding operation.

Referring to Fig. 5, the compression sensing part is formed using the rubber 300 including the bottom portion 320 and the lateral portion 310, each of which is printed with the carbon pattern. Accordingly, when the robot cleaner is caught in a predetermined gap, such as the sofa or the like, to compress the bottom portion 320 or the lateral portion 310 with a predetermined force, the carbon pattern printed on the bottom portion 320 and the lateral portion 310 senses the compression of the bottom portion 320 or the lateral portion 310, thereby allowing the robot cleaner to perform a corresponding operation.

Here, reference numeral 101 indicates an inner cover.

As described above, according to one embodiment of the invention, the robot cleaner has improved movement ability to provide various functions, such as doorsill-overpassing, carpet-traveling, and the like, through improvement in arrangement of a battery, a suction motor, a main brush, and a dust collection box, thereby improving the utility of the robot cleaner.

## Claims

1. A robot cleaner including a drive wheel (110) driven to move on a cleaning course set according to a detection result of an internal sensor, a brush assembly (120) disposed at a bottom of the robot cleaner, and a suction unit disposed around a center of the robot cleaner to collect dust or foreign matter from a floor of a room when the brush assembly rotates while touching the floor, **characterized in that** the suction unit comprises:
a dust collection box (130) disposed behind the drive wheel (110) and spaced a predetermined distance therefrom;
a filter unit (140) communicatively coupled to a rear side of the dust collection box (130);
a suction duct assembly (150) mounted on a center of the suction unit to face the drive wheel (110) and having one end communicatively coupled to the filter unit (140) to suction air for drawing the dust and foreign matter from the floor into the dust collection box (130);
a dual bumper (160) having a composite structure capable of sensing collision and compression of the dual bumper; and
a battery (170) mounted between the suction duct assembly (150) and the dual bumper (160) having the composite structure, the battery (170) being spaced a predetermined distance from a front side of the drive wheel (110),
**characterized in that** the suction duct assembly (150) comprises:
a suction motor (151) disposed between the battery (170) and a main brush motor (180); and
a suction channel (152) having one end coupled to the suction motor (151) with one end of the suction motor (151) inserted into the one end of the suction channel (152), and the other end bent to be disposed along the dual bumper (160), the suction channel (152) being disposed outside one end of the dust collection box (130) and the brush assembly (120).

2. The robot cleaner according to claim 1, **characterized by** further comprising:
a floor sensor (191) and an obstacle sensor (192) coupled to the dual bumper (160) and spaced a predetermined distance from each other,
wherein the dual bumper (160) is divided into upper and lower parts.

3. The robot cleaner according to claim 1, **characterized in that** the dual bumper (160) is formed with spaces each having a predetermined shape and placed at regular intervals on an inner side of the dual bumper (160).

4. The robot cleaner according to claim 3, **characterized in that** a compression sensing part detecting an external force is disposed in the space of the dual bumper (160).

5. The robot cleaner according to claim 3, **characterized by** further comprising:
a controller (185) stopping the drive wheel (110) when the compression sensing part outputs a high-level signal.

6. The robot cleaner according to claim 5, **characterized in that** the compression sensing part comprises sensor films (200) coupled to a horizontal bottom surface and a vertical wall of the space.

7. The robot cleaner according to claim 6, **characterized in that** the sensor film (200) comprises a flexible print circuit board (FPC) (220) and two lines of print pattern (210) formed on the FPC (220).

8. The robot cleaner according to claim 5, **characterized in that** the compression sensing part is a bidirectional contact-type rubber (300).

9. The robot cleaner according to claim 8, **characterized in that** the bidirectional contact-type rubber (300) comprises bottom portions (320) and lateral portions (310) alternating with each other at regular intervals, each of the bottom portions (320) and the lateral portions (310) being formed with a carbon pattern.

## Patentansprüche

1. Roboterreiniger mit einem Laufrad (110), das angetrieben wird, damit es sich auf einem Reinigungsweg bewegt, der entsprechend einem Erfassungsergebnis eines inneren Sensors eingestellt ist, einer Bürstenanordnung (120), die an einem Boden des Roboterreinigers angeordnet ist, und einer Saugeinheit, die um eine Mitte des Roboterreinigers herum angeordnet ist, damit sie Staub oder Fremdstoffe von einem Boden eines Raums aufsammelt, wenn sich die Bürstenanordnung dreht, während sie den Boden berührt, **dadurch gekennzeichnet, dass** die Saugeinheit umfasst:
einen Staubsammelbehälter (130), der hinter dem Laufrad (110) angeordnet ist und einen vorher festgelegten Abstand dazu aufweist;
eine Filtereinheit (140), die verbindungsmäßig mit einer Rückseite des Staubsammelbehälters (130) gekoppelt ist;
eine Saugrohranordnung (150), die an einer Mitte der Saugeinheit montiert ist und dem Laufrad (110) gegenüberliegt und ein Ende aufweist, das verbindungsmäßig mit der Filtereinheit (140) gekoppelt ist, damit sie Luft zum Mitreißen des Staubs und der Fremdstoffe von dem Boden in den Staubsammelbehälter (130) ansaugt;
einen Doppelstoßfänger (160) mit einem zusammengesetzten Aufbau, der in der Lage ist, Kollisionen und Druck auf den Doppelstoßfänger zu erfassen; und
eine Batterie (170), die zwischen der Saugrohranordnung (150) und dem Doppelstoßfänger (160) mit dem zusammengesetzten Aufbau montiert ist, wobei die Batterie (170) einen vorher festgelegten Abstand zu einer Vorderseite des Laufrads (110) aufweist,
**dadurch gekennzeichnet, dass** die Saugrohranordnung (150) umfasst:
einen Saugmotor (151), der zwischen der Batterie (170) und einem Hauptbürstenmotor (180) angeordnet ist; und
einen Saugkanal (152) mit einem Ende, das mit dem Saugmotor (151) gekoppelt ist, wobei ein Ende des Saugmotors (151) in dem einen Ende des Saugkanals (152) steckt und wobei das andere Ende gebogen ist, damit es entlang dem Doppelstoßfänger (160) angeordnet ist, wobei der Saugkanal (152) außerhalb eines Endes des Staubsammelbehälters (130) und der Bürstenanordnung (120) angeordnet ist.

2. Roboterreiniger nach Anspruch 1, **dadurch gekennzeichnet, dass** er ferner umfasst:
einen Bodensensor (191) und einen Hindernissensor (192), die mit dem Doppelstoßfänger (160) gekoppelt sind und einen vorher festgelegten Abstand zueinander aufweisen,
wobei der Doppelstoßfänger (160) in einen oberen und unteren Teil unterteilt ist.

3. Roboterreiniger nach Anspruch 1, **dadurch gekennzeichnet, dass** der Doppelstoßfänger (160) mit Aussparungen versehen ist, die jeweils eine vorher festgelegte Form aufweisen und in regelmäßigen Abständen an einer Innenseite des Doppelstoßfängers (160) platziert sind.

4. Roboterreiniger nach Anspruch 3, **dadurch gekennzeichnet, dass** ein Druckerfassungsteil, das eine äußere Kraft erfasst, in der Aussparung des Doppelstoßfängers (160) angeordnet ist.

5. Roboterreiniger nach Anspruch 3, **dadurch gekennzeichnet, dass** er ferner umfasst:
eine Steuerung (185), die das Laufrad (110) anhält, wenn das Druckerfassungsteil ein Großsignal ausgibt.

6. Roboterreiniger nach Anspruch 5, **dadurch gekennzeichnet, dass** das Druckerfassungsteil Sensorfolien (200) umfasst, die mit einer waagerechten Bodenfläche und einer senkrechten Wand der Aussparung gekoppelt sind.

7. Roboterreiniger nach Anspruch 6, **dadurch gekennzeichnet, dass** die Sensorfolie (200) eine flexible Leiterplatte (flexible printed circuit board, FPC) (220) und zwei auf der FPC (220) ausgebildete Reihen eines Druckmusters (210) umfasst.

8. Roboterreiniger nach Anspruch 5, **dadurch gekennzeichnet, dass** das Druckerfassungsteil ein bidirektionaler Kontaktgummi (300) ist.

9. Roboterreiniger nach Anspruch 8, **dadurch gekennzeichnet, dass** der bidirektionale Kontaktgummi (300) Bodenabschnitte (320) und seitliche Abschnitte (310) umfasst, die sich in regelmäßigen Abständen abwechseln, wobei jeder der Bodenabschnitte (320) und der seitlichen Abschnitt (310) mit einem Kohlenstoffmuster versehen ist.

## Revendications

1. Robot nettoyeur comprenant une roue d'entraînement (110) entraînée pour se déplacer sur un trajet de nettoyage établi conformément à un résultat de détection d'un capteur interne, un ensemble brosse (120) disposé à une partie inférieure du robot nettoyeur, et une unité d'aspiration disposée autour d'un centre du robot nettoyeur pour collecter la poussière ou la matière étrangère provenant d'un sol d'une pièce lorsque l'ensemble brosse tourne tout en touchant le sol, **caractérisé par le fait que** l'unité d'aspiration comprend :
une boîte de collecte de poussière (130) disposée derrière la roue d'entraînement (110) et espacée d'une distance prédéterminée de celle-ci ;
une unité de filtration (140) couplée de manière communicante à un côté arrière de la boîte de collecte de poussière (130) ;
un ensemble conduit d'aspiration (150) monté sur un centre de l'unité d'aspiration pour faire face à la roue d'entraînement (110) et ayant une extrémité couplée de manière communicante à l'unité de filtration (140) pour aspirer l'air de façon à aspirer la poussière et la matière étrangère provenant du sol dans la boîte de collecte de poussière (130) ;
un amortisseur double (160) ayant une structure composite capable de détecter une collision et une compression de l'amortisseur double ; et
une batterie (170) montée entre l'ensemble conduit d'aspiration (150) et l'amortisseur double (160) ayant la structure composite, la batterie (170) étant espacée d'une distance prédéterminée d'un côté avant de la roue d'entraînement (110),
**caractérisé par le fait que** l'ensemble conduit d'aspiration (150) comprend :
un moteur d'aspiration (151) disposé entre la batterie (170) et un moteur à balais principal (180) ; et
un canal d'aspiration (152) ayant une extrémité couplée au moteur d'aspiration (151) avec une extrémité du moteur d'aspiration (151) introduite dans l'extrémité précitée du canal d'aspiration (152), et l'autre extrémité recourbée pour être disposée le long de l'amortisseur double (160), le canal d'aspiration (152) étant disposé à l'extérieur d'une extrémité de la boîte de collecte de poussière (130) et de l'ensemble brosse (120).

2. Robot nettoyeur selon la revendication 1, **caractérisé par le fait qu'**il comprend en outre :
un détecteur de sol (191) et un détecteur d'obstacle (192) couplés à l'amortisseur double (160) et espacés d'une distance prédéterminée l'un de l'autre,
l'amortisseur double (160) étant divisé en parties supérieure et inférieure.

3. Robot nettoyeur selon la revendication 1, **caractérisé par le fait que** l'amortisseur double (160) comporte des espaces ayant chacun une forme prédéterminée et placés à intervalles réguliers sur un côté intérieur de l'amortisseur double (160).

4. Robot nettoyeur selon la revendication 3, **caractérisé par le fait qu'**une partie de détection de compression détectant une force externe est disposée dans l'espace de l'amortisseur double (160).

5. Robot nettoyeur selon la revendication 3, **caractérisé par le fait qu'**il comprend en outre :
un contrôleur (185) arrêtant la roue entraînement (110) lorsque la partie de détection de compression délivre un signal de haut niveau.

6. Robot nettoyeur selon la revendication 5, **caractérisé par le fait que** la partie de détection de compression comprend des films détecteurs (200) couplés à une surface inférieure horizontale et à une paroi verticale de l'espace.

7. Robot nettoyeur selon la revendication 6, **caractérisé par le fait que** le film détecteur (200) comprend une carte de circuit imprimé souple (FCP) (220) et deux lignes de motif d'impression (210) formées sur la FCP (220).

8. Robot nettoyeur selon la revendication 5, **caractérisé par le fait que** la partie de détection de compression est un caoutchouc du type à contact bidirectionnel (300).

9. Robot nettoyeur selon la revendication 8, **caractérisé par le fait que** le caoutchouc du type à contact bidirectionnel (300) comprend des parties inférieures (320) et des parties latérales (310) alternant entre elles à intervalles réguliers, chacune des parties inférieures (320) et des parties latérales (310) comportant un motif carboné.
